# EUROPEAN PATENT SPECIFICATION

(11) **EP 4 394 737 B1**
(45) Date of publication and mention of the grant of the patent: **07.05.2025**
(21) Application number: 23211751.5
(22) Date of filing: 23.11.2023
(51) Int. Cl.: G08C 17/02, H04W 4/80

(54) **WIRELESS COMMUNICATION APPARATUS AND REMOTE CONTROL SYSTEM**
DRAHTLOSE KOMMUNIKATIONSVORRICHTUNG UND FERNBEDIENUNGSSYSTEM
APPAREIL DE COMMUNICATION SANS FIL ET SYSTÈME DE COMMANDE À DISTANCE

(30) Priority: 28.12.2022 JP 2022211330
(43) Date of publication of application: 03.07.2024
(73) Proprietor: SMK Corporation, Tokyo 142-8511 (JP)
(72) Inventor: Haijima, Toshio, Tokyo, 142-8511 (JP); Miwa, Kenichi, Tokyo, 142-8511 (JP)
(74) Representative: Michalski Hüttermann & Partner Patentanwälte mbB

(56) References cited:
- EP-A1- 3 537 777
- JP-A- 2020 170 993
- US-A1- 2015 296 073
- US-A1- 2017 078 610
- US-A1- 2022 179 377

## Description

### Field

The present invention relates to a wireless communication apparatus and a remote control system, and particularly relates to a wireless communication apparatus that performs power-saving near field communication between a remote control apparatus and a control target apparatus and a remote control system including the wireless communication apparatus.

### Background

A typical remote control system may remotely control various types of equipment as control target apparatuses according to operation input made to a remote control apparatus, i.e., a remote controller (hereinafter also merely referred to as a remote), having a form easily operable with a hand.

For this remote or this remote control system, both ease of operation and an advanced control function have been demanded while not only the size and installation form of the control target apparatus but also the form of connection with peripheral equipment, the form of connection with a network, and the like have been diversified.

For this reason, there have been proposed wireless communication apparatus and system configured such that in addition to or instead of a typical infrared communication (IR communication) function, a remote is provided with a near field communication function to support so-called over-the-horizon operation and bidirectional communication between the remote and a control target apparatus, such as wireless communication apparatus and system employing a power-saving wireless communication technique known as communication standards such as Bluetooth (registered trademark) or ZigBee (registered trademark).

The wireless communication apparatus and system of this type, which focus on the fact that a communication packet of a predetermined format is exchanged to detect the presence of adjacent equipment at a state before connection establishment by pairing and may be configured such that certain instant communication is available by communication between plural pieces of communication equipment without a server (central) (see, e.g., JP 2015 70284 A).

Specifically, JP 2015 70284 A focuses on an advertising packet to be exchanged to detect adjacent equipment by Bluetooth_Low_Energy (hereinafter referred to as BLE) communication before connection establishment, and describes that certain information communication between wireless terminals before connection establishment is available in such a manner that information including an equipment-specific identifier is transmitted and received concomitantly with exchange of such a packet. For example, Patent Literature 1 describes that an advertising packet from a store terminal includes a store website address and can be used as an Online_to_Offline promotion tool for guiding a user to an access to such a website. JP 2020 170 993 A aims to provide a communication system and a communication method that can shorten a time until operation execution of a communication target. A vehicle is provided with a communication system that wirelessly communicates with a terminal. The communication system causes one of a terminal authentication unit provided on the vehicle and the terminal to transmit a signal to be detected for causing the presence of its own device to be detected in the vicinity, and if the other receives it, makes a communication connection to perform communication. The communication system includes a control unit that controls the operation of the vehicle based on the control information upon receiving the control information when the control information related to the control of the operation of the vehicle is transmitted from the terminal together with the signal to be detected.

### Summary

However, in the above-described typical wireless communication apparatus and system, advertising data (Adv_Data) described in a PDU (Protocol_Data_Unit) area of the advertising packet is configured only to such an extent that the advertising data is used as the communication promotion tool.

For this reason, when the typical wireless communication apparatus and system are applied to a remote control system that remotely controls a control target apparatus according to input operation on a remote, one-to-one communication connection (connection) is normally established by pairing, leading to a problem that communication with HOST (software element that handles communication information) needs to be made at certain time intervals in order to maintain a communication connection state after pairing and power cannot be sufficiently saved.

In response to such a problem, the power may be saved in such a manner that BLE communication connection is cut off into a sleep state (i.e., so-called deep sleep state) for reducing power consumption after a lapse of certain time. However, reconnection is necessary to exit from the sleep state, leading to a problem that reconnection takes time and responsiveness to remote operation is degraded.

Moreover, there is also a problem that a partner in remote control by a remote is limited to one due to the necessity of establishing one-to-one communication connection by pairing.

An aspect of the present invention has been made in order to solve the above-described typical problems, and is intended to provide a wireless communication apparatus and a remote control system configured so that the power of a remote can be saved and degradation of responsiveness to remote operation can be effectively reduced without limiting a partner in remote control by the remote to one.

The invention is defined by claim 1. Embodiments of the invention are described in the dependent claims. In order to accomplish the above-described object, the wireless communication apparatus according to an aspect of the present invention is (1) a wireless communication apparatus including a transmission-side wireless communication unit built in a remote control apparatus having an operation unit to which operation input for a predetermined control instruction is made and a reception-side wireless communication unit incorporated into a control target apparatus to be controlled by the remote control apparatus, the wireless communication apparatus performing power-saving near field communication between the remote control apparatus and the control target apparatus via the transmission-side wireless communication unit and the reception-side wireless communication unit. The transmission-side wireless communication unit includes a first communication unit capable of performing the power-saving near field communication and a first control unit that generates a communication connection request including control instruction information corresponding to the control instruction input to the operation unit and identification information on the remote control apparatus and multi-addresses the communication connection request via the first communication unit. The reception-side wireless communication unit includes a second communication unit capable of performing the power-saving near field communication and a second control unit that determines, when receiving the communication connection request via the second communication unit, the identification information on the remote control apparatus in the communication connection request. The control instruction information includes device information corresponding to the remote control apparatus and a specific control command for the device. The first control unit of the transmission-side wireless communication unit generates the communication connection request including, in a communication packet of a predetermined format, specific company identification information and communication data having the device information and the specific control command for the device specified by the control instruction information. The second control unit of the reception-side wireless communication unit determines whether or not the identification information on the remote control apparatus matches remote control apparatus identification information saved in advance in the reception-side wireless communication unit, and if matched, supplies the specific control command to a device side based on the communication data.

With this configuration, in the apparatus of an aspect of the present invention, when the communication connection request is multi-addressed from the transmission-side wireless communication unit, the reception-side wireless communication unit determines, by the second control unit, whether or not the received remote control apparatus identification information matches the remote control apparatus identification information saved in advance, and if matched, supplies the specific control command to the device side based on the received communication data. Thus, when the control target apparatus is remotely controlled according to the input operation on the remote, before connection is established between both wireless communication units by pairing, the specific control command corresponding to the operation input to the operation unit can be supplied to the specific device on the control target apparatus side in the communication data of the communication connection request. As a result, power can be saved and degradation of responsiveness to remote operation can be effectively reduced without the need for communicating with HOST at certain time intervals for maintaining a communication connection state after pairing.

(2) In an embodiment of an aspect of the present invention, at least either the transmission-side wireless communication unit or the reception-side wireless communication unit may include a plurality of units. In this case, not only one-to-one communication but also one-to-multiple communication, multiple-to-one communication, and multiple-to-multiple communication are allowed depending on the numbers of transmission-side wireless communication units and reception-side wireless communication units.
(3) In an embodiment of an aspect of the present invention, the first control unit of the transmission-side wireless communication unit may execute sleep mode control of bringing the transmission-side wireless communication unit into a sleep state in a case where no operation is made on the operation unit for a predetermined period, and cause the transmission-side wireless communication unit to exit the sleep state when detecting that operation is made on the operation unit. With this configuration, the power consumption of the remote control apparatus is reduced during the sleep mode, and in addition, the transmission-side wireless communication unit can promptly exit the sleep state according to the operation input to the operation unit and promptly transmit the specific control command corresponding to the operation input, such as a control command for starting the device, before connection establishment by pairing.
(4) In an embodiment of an aspect of the present invention, the power-saving near field communication may be near field communication in accordance with a Bluetooth_Low_Energy standard, the transmission-side wireless communication unit may broadcast, by the first communication unit, the communication connection request in the form of a predetermined advertising packet including a protocol data unit of an advertising channel in accordance with the standard, and the first control unit may incorporate, into the protocol data unit of the advertising channel, the specific company identification information and advertising data including the device information and the specific control command for the device specified by the control instruction information. **In** this case, the power can be sufficiently saved in accordance with Bluetooth_Low_Energy communication standards.
(5) According to the present invention, the second control unit of the reception-side wireless communication unit determines, on condition that the second control unit has received the communication connection request, whether or not the specific company identification information is detected in the communication packet of the communication connection request without generating a communication connection response allowing connection partner authentication processing based on the identification information on the remote control apparatus in the communication connection request. With this configuration, when the specific company identification information is detected under a pairing setting mode, preparation for transmitting the control command to the corresponding device based on the communication data at this time can be facilitated.
(6) In an embodiment of an aspect of the present invention, when determining that the control target apparatus is a device specified by the communication data, the reception-side wireless communication unit may supply the specific control command to the device side by universal asynchronous receiver transmitter. In this case, the specific control command can be selectively transmitted to the device specified by the device information in the communication data by the universal asynchronous receiver transmitter, thereby controlling the device.
(7) In an embodiment of an aspect of the present invention, the first communication unit of the transmission-side wireless communication unit may be capable of receiving a control signal corresponding to the control instruction input to the operation unit from external equipment, and the first control unit may also have a function of generating control instruction information corresponding to the control instruction input when receiving the control signal corresponding to the control instruction input from the external equipment via the first communication unit. In this case, when the transmission-side wireless communication unit receives the control signal corresponding to the control instruction input to the operation unit of the remote control apparatus from the external equipment, the first control unit can generate the control instruction information corresponding to the control instruction input, and therefore, expandability in the remote operation can be enhanced.

In order to accomplish the above-described object, the remote control system according to an aspect of the present invention includes (8) a remote control apparatus including an operation unit to which operation input for a predetermined control instruction is made, a control target apparatus to be controlled by the remote control apparatus, and the wireless communication apparatus having the configuration of (1) or further having the configuration of any of (2) to (7) in addition to the configuration of (1).

With this configuration, in the system of an aspect of the present invention, when the communication connection request is multi-addressed from the transmission-side wireless communication unit, the reception-side wireless communication unit determines whether or not the received remote control apparatus identification information matches the remote control apparatus identification information saved in advance, and if matched, supplies the specific control command to the device on the control target apparatus side based on the received communication data. Thus, when the control target apparatus is remotely controlled according to the input operation on the remote, before connection is established between both wireless communication units by pairing, the specific control command corresponding to the operation input to the operation unit of the remote control apparatus can be supplied to the specific device on the control target apparatus side in the communication data of the communication connection request. As a result, the power of the remote control apparatus can be saved and degradation of responsiveness to remote operation can be effectively reduced without the need for communicating with HOST at certain time intervals for maintaining a communication connection state after pairing.

Note that in an aspect of the present invention, the first control unit of the transmission-side wireless communication unit may generate the communication connection request including, in the communication packet of the predetermined format, the communication data encrypted by a predetermined method, and when the remote identification information is determined as matched or the specific company identification information is further detected in the communication packet of the communication connection request, the second control unit of the reception-side wireless communication unit may decrypt the encrypted communication data by the predetermined encryption method.

According to an aspect of the present invention, a wireless communication apparatus and a remote control system can be provided, which are configured so that the power of a remote control apparatus can be saved and degradation of responsiveness to remote operation can be effectively reduced without limiting a partner in remote control by the remote control apparatus to one.

### Brief Description of Drawings

Fig. 1 is a schematic configuration diagram of a remote control system including a wireless communication apparatus according to one embodiment of an aspect of the present invention.
Fig. 2 is a diagram for describing wireless communication between a plurality of wireless communication units in the remote control system of one embodiment of an aspect of the present invention.
Fig. 3 is a diagram for describing a BLE packet structure used in wireless communication in the remote control system of one embodiment of an aspect of the present invention.

### Description of Embodiments

Hereinafter, embodiments of an aspect of the present invention will be described with reference to the drawings.

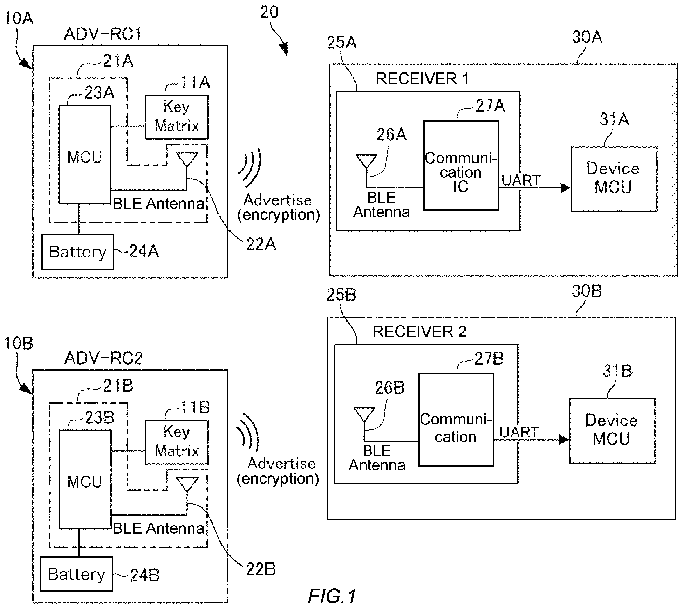

Figs. 1 to 3 show a wireless communication apparatus and a remote control system including the apparatus according to one embodiment of an aspect of the present invention.

First, the configurations of the apparatus and the system will be described.

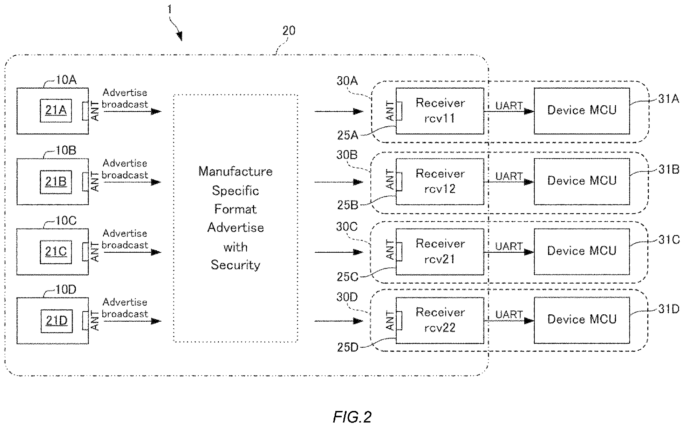

As shown in Figs. 1 and 2, a remote control system 1 according to one embodiment of an aspect of the present invention includes at least one remote such as a plurality of remotes 10A, 10B (remote control apparatuses) assigned with reference numerals ADV-RC1, ADV-RC2 in these figures, at least one control target apparatus such as a plurality of control target apparatuses 30A, 30B to be remotely controlled by the remotes 10A, 10B, and a wireless communication apparatus 20 that performs predetermined power-saving near field communication, such as near field communication (hereinafter also merely referred to as BLE communication) in accordance with Bluetooth_Low_Energy (registered trademark) standards, between the remotes 10A, 10B and the control target apparatuses 30A, 30B.

As shown in Fig. 1, the remote 10A, 10B has an operation unit 11A, 11B to which operation input for a predetermined control instruction can be made, and although not specifically shown in the figure, the operation unit 11A, 11B is provided with a plurality of not-shown operation keys (operation input elements) to be operated according to the contents of the control instruction and a key operation detection circuit that detects the operation states of the plurality of operation keys by, e.g., matrix scan.

The wireless communication apparatus 20 includes transmission-side wireless communication units 21A, 21B built in the remotes 10A, 10B and reception-side wireless communication units 25A, 25B incorporated into the control target apparatuses 30A, 30B.

The control target apparatus 30A, 30B is equipment controllable by the remote 10A, 10B, such as any of home appliances including video equipment, audio equipment, air-conditioning equipment, and lighting equipment. The reception-side wireless communication units 25A, 25B which are remote receiver units and device MCUs 31A, 31B that control bodies of the control target apparatuses targeted for remote control are incorporated into the plurality of control target apparatuses 30A, 30B. Note that in description below, the type of home appliance as an operation target apparatus will be referred to as a device in some cases.

As shown in Fig. 2, the remote control system 1 of the present embodiment further includes a plurality of remotes 10C, 10D (remote control apparatuses) and a plurality of control target apparatuses 30C, 30D which are, for example, home appliances to be remotely controlled by any of the remotes 10A to 10D, and the wireless communication apparatus 20 performs the BLE communication between the remotes 10A to 10D and the control target apparatuses 30A to 30D. Transmission-side wireless communication units 21C, 21D substantially similar to those of the plurality of remotes 10A, 10B are built in the plurality of remotes 10C, 10D, for example. Moreover, reception-side wireless communication units 25C, 25D substantially similar to the reception-side wireless communication units 25A, 25B are incorporated into the control target apparatuses 30C, 30D, and these units are assigned with a reference character Receiver.

The remote 10A, 10B further includes a wireless communication antenna (hereinafter referred to as a BLE antenna) 22A, 22B forming part of the transmission-side wireless communication unit 21A, 21B and being capable of performing the BLE communication, a microcontroller unit (MCU) 23A, 23B which is a microprocessor-based controller IC integrated with a required input-output interface circuit in addition to an internal memory such as a ROM or a RAM, and a power supply battery 24A, 24B, such as a dry battery or a rechargeable battery, that supplies control current to the MCU 23A, 23B.

Here, the transmission-side wireless communication unit 21A has the function of a wireless communication module having the minimum wireless transmitter configuration allowing at least BLE transmission via the BLE antenna 22A, and similarly, each transmission-side wireless communication unit 21B to 21D has the function of a wireless communication module having the minimum wireless transmitter configuration allowing at least BLE transmission via the BLE antenna 22B, 22C, 22D.

The MCU 23A built in the transmission-side wireless communication unit 21A is equivalent to a first control unit, and has a key operation information generation function of generating remote data of a predetermined data format indicating the operation states of the plurality of operation keys based on a key operation detection signal from the operation unit 11A by executing a predetermined key operation information generation program stored and saved in advance in the internal memory (ROM). The remote data is data corresponding to the control instruction input to the operation unit 11A and including device information corresponding to each operation target apparatus 30A to 30D and command data for being a control command itself, or for generating the control command which is a specific control command for each device, and is equivalent to the above-described control instruction information. The contents of the control instruction input are assigned in advance to each operation key of the operation unit 11A. Specifically, the internal memory of the MCU 23A stores and saves in advance, corresponding to each operation key of the operation unit 11A, the device information (e.g., information indicating that the operation target apparatus is a television set) corresponding to the operation target device to be operated according to the operation key and the command data (e.g., data for power ON/OFF control) for the device. The MCU 23A uniquely determines, based on the key operation detection signal, the device information and the command data according to the operated key, thereby generating the remote data including such data, i.e., the control instruction information.

Further, the MCU 23A has a communication control function (control unit) of generating an advertising packet including predetermined advertising data with identification information (advertiser's address) on the remote 10A, specific company identification information, and the device information and the command data specified by the remote data based on, e.g., the key operation information generated by the key operation information generation function according to the operation input to the remote 10A and address information, which is the identification information on the remote 10A, and a predetermined transmission condition stored in advance in the internal memory, converting the advertising packet into an RF signal with a 2.4 GHz band (so-called ISM band) by gaussian frequency shift keying (Gaussian_Frequency_Shift_Keying; GFSK), and transmitting the RF signal via the antenna by a predetermined transmission method using a plurality of RF channels with predetermined channel intervals, such as a frequency hopping method using advertising channels.

In the key operation information generation function of the MCU 23A as described herein, the remote data can be used in the transmission-side wireless communication unit 21A as the wireless communication module. Note that the key operation information generation function of generating the remote data of the predetermined data format indicating the operation state of the operation key is not necessarily executed in the MCU 23A alone, but may be executed in another MCU connected to the MCU 23A. That is, a functional element equivalent to the MCU 23A may be formed by a plurality of MCUs required. In this case, the remote data generated by another MCU is provided from such a MCU to the MCU 23A via a serial communication interface such as well-known universal asynchronous receiver transmitter (Universal_Asynchronous_Receiver_Transmitter; UART).

The address information stored in advance in the internal memory of the MCU 23A may include the remote identification information and the equipment-specific address (BD_ADDR) of the wireless communication module as the transmission-side wireless communication unit corresponding to the remote identification information. The advertiser's address in the advertising packet is only required to be at least information for identifying the remote 10A as the remote identification information, and is not limited to an equipment-specific physical address and may be unique identification information or address generated and provided by any component in the system.

Each of the MCU 23B and other MCUs (hereinafter merely referred to as MCUs 23) built in the other transmission-side wireless communication units 21B to 21D has, substantially similarly to the transmission-side wireless communication unit 21A, a key operation information generation function of generating remote data of a predetermined data format indicating the operation states of the plurality of operation keys based on a key operation detection signal from, e.g., the operation unit 11B by executing a predetermined key operation information generation program stored and saved in advance in the internal memory (ROM). As in the MCU 23A, the MCU 23 uniquely determines, based on the key operation detection signal, device information and specific command data according to the operated key, thereby generating remote data including such data, i.e., control instruction information.

Each MCU 23 further has a communication control function of generating an advertising packet including predetermined advertising data with identification information on the remote 10B, 10C, 10D, specific company identification information, and the device information and the command data specified by the remote data based on, e.g., the key operation information generated by the key operation information generation function according to the operation input to the remote 10B, 10C, 10D and address information, which is the identification information on the remote 10B, 10C, 10D, and a predetermined transmission condition stored in advance in the internal memory, converting the advertising packet into an RF signal with a 2.4 GHz band by GFSK, and transmitting the RF signal via the antenna by the frequency hopping method using the plurality of RF channels with the predetermined channel intervals.

The reception-side wireless communication unit 25A, 25B shown in Fig. 1 includes at least a BLE antenna 26A, 26B and a communication IC 27A, 27B which is a microprocessor-based controller IC integrated with a required input-output interface circuit in addition to an internal memory such as a ROM or a RAM.

Here, in a case where the reception-side wireless communication unit 25A, 25B is within a relatively-short distance from the remote 10A, 10B and can receive the RF signal transmitted from any of the remotes 10A, 10B, the reception-side wireless communication unit 25A, 25B functions as a wireless communication module that receives the RF signal transmitted from the remote 10A, 10B via the BLE antenna 26A, 26B.

The communication IC 27A, 27B of the reception-side wireless communication unit 25A, 25B functions, for example, as a 2.4 GHz bandpass filter and a GFSK demodulation unit by executing a predetermined control program saved in the internal memory, and allows the RF signal received via the BLE antenna 26A, 26B to pass through the bandpass filter and demodulates the RF signal into the advertising packet by the GFSK demodulation unit.

Further, the communication IC 27A, 27B stores in advance, in the internal memory, the identification information on any of the remotes 10A, 10B in the advertising packet, and serves as a second control unit having both an identification information determination function of determining whether or not the identification information on any of the remotes 10A, 10B as the advertiser's address in the advertising packet and the remote identification information stored in advance in the internal memory match each other and a control command supply function of supplying, when the advertiser's address in the received advertising packet and the remote identification information already stored in advance in the internal memory match each other, a specific control command based on the device information and the command data in the received advertising data to the device MCU 31A, 31B via a UART interface. Note that the form of the control command to be supplied to the device MCU 31A, 31B from the communication IC 27A, 27B is not limited to the control command supplied via the UART interface. For example, in a case where the control target apparatus 30A, 30B is provided with a dedicated infrared remote for operating the control target apparatus 30A, 30B, the communication IC 27A, 27B may generate a high-low signal including a plurality of high-level periods and a plurality of low-level periods and having a predetermined time length corresponding to a signal obtained by removing a carrier modulation signal from an infrared signal transmitted from the dedicated infrared remote, and may supply the high-low signal to the device MCU 31A, 31B. In this case, the communication IC 27A, 27B stores, in advance, the waveform of a high-low signal (signal obtained by removing a carrier frequency from an infrared signal transmitted from the dedicated infrared remote) corresponding to each operation key of the dedicated infrared remote, specifies a high-low signal corresponding to the control instruction input to the operation unit 11A of the remote 10A based on the device information and the command data in the received advertising data, and supplies the high-low signal to the device MCU 31A, 31B. With this configuration, the device MCU 31A, 31B can control, based on the signal supplied from the communication IC 27A, 27B, the control target apparatus 30A, 30B by executing the same processing as that when receiving the operation signal from the dedicated infrared remote.

The communication IC 27A, 27B can supply, by the identification information determination function, a specific control command corresponding to the device information and the command data in the advertising data received from specific one or more of the remotes 10A to 10D as a signal only from the remote 10A (ADV-RC1), a signal only from the remote 10B (ADV-RC2), or signals from both the remotes 10A, 10B (ADV-RC1, 2) to the device MCU 31A, 31B of the control target apparatus 30A, 30B.

Specifically, the communication IC 27A, 27B can supply, with reference to the advertising packet from, e.g., the remote of which the ID code as the identification information matches the ID code of the remote already stored in advance in the internal memory, the control command (e.g., Command_Data of "0x01" indicating power ON/OFF) specified by the command data to the specified device (e.g., television set indicated by Device_Data of "0x01") based on the specific device information and the specific command data specified subsequently to a company identifier as AD_Data in the packet. Note that other types of control information required for the specified control command may be included as necessary in communication data 82 in the form of, e.g., Control_Info.

These reception-side wireless communication units 25A, 25B are each indicated by Receiver in Fig. 2, and are assigned with reference characters rcv11, rev12. Similarly, the reception-side wireless communication units 25C, 25D indicated by Receiver and assigned with reference characters rev21, rev22 have configurations substantially similar to those of the reception-side wireless communication units 25A, 25B, and each communication IC functions as a 2.4 GHz bandpass filter and a GFSK demodulation unit such that the RF signal received via the BLE antenna is allowed to pass through the bandpass filter and is demodulated into the advertising packet by the GFSK demodulation unit.

The reception-side wireless communication unit 25C, 25D stores in advance, in the internal memory of the communication IC, the identification information on any of the remotes 10A to 10D in the advertising packet, and the communication IC serves as a second control unit having both an identification information determination function of determining whether or not the identification information on any of the remotes 10A to 10D as the advertiser's address in the advertising packet and the remote identification information stored in advance in the internal memory match each other and a control command supply function of supplying, when the advertiser's address in the received advertising packet and the remote identification information already stored in advance in the internal memory match each other, a specific control command based on the device information and the command data in the received advertising data to the device MCU 31C, 31D via a UART interface. Note that as in the case of the communication IC 27A, 27B of the reception-side wireless communication unit 25A, 25B as described above, the control command may be in such a form that the reception-side wireless communication unit 25C, 25D generates a high-low signal with a predetermined length obtained by removing a carrier modulation signal from an infrared signal transmitted from a dedicated infrared remote provided for the control target apparatus 30C, 30D and supplies the high-low signal to the device MCU 31C, 31D.

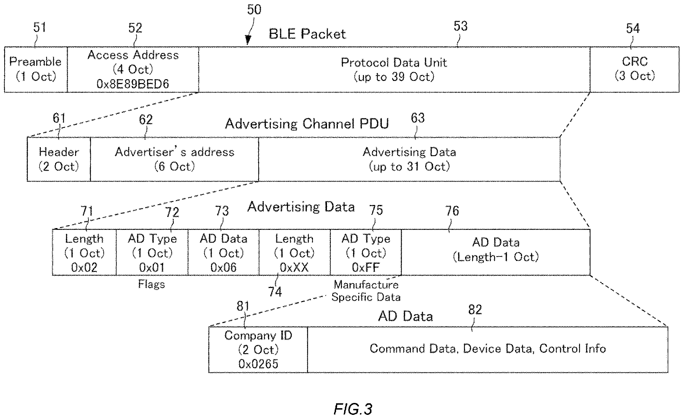

Fig. 3 shows a structure example of a BLE packet, i.e., the advertising packet, on the advertising channel, the BLE packet being generated according to the key operation input to the remote 10A, 10B, 10C, 10D when specific key operation input is made to any of the remotes 10A to 10D and being multi-addressed (broadcasted) in the form of a modulated RF signal.

As shown in the uppermost line in Fig. 3, a BLE packet 50 includes, subsequently to a preamble 51 for bit-by-bit timing synchronization on the reception side, an access address 52 which is identification information for determining a packet to be received on the reception side, a protocol data unit 53 equivalent to the unit of transmission and reception of transmission data on the advertising channel, and a CRC 54 which is a code for error detection.

As shown in the second line from the top in Fig. 3, the protocol data unit 53 has such a structure that a header 61 defining the type and length of the protocol data unit 53 is followed by an advertiser's address 62 as the identification information on any of the remotes 10A to 10D operated and advertising data 63 as data to be multi-addressed.

Further, as shown in the third line from the top in Fig. 3, the advertising data 63 includes a first AD structure portion having three elements of a length 71, an AD type 72, and AD data 73 and a second AD structure portion having a variable length and having three elements of a length 74, an AD type 75, and AD data 76.

Here, the first AD structure portion is in a predetermined format according to the advertising packet in the BLE communication, and the length (Length) 71 has, for example, a value of "0x02." The AD type (AD_Type) 72 has a Flags type value of "0x01" indicating detection of a connection partner and a connection function, and the AD data (AD_Data) 73 has, for example, a value of "0x06."

The length 74 in the second AD structure portion has a value of "0xXX" indicating the variable length, and the AD type 75 has a type value of "0xFF" indicating a manufacturer-specific advertising data type (Manufacturer_Specific_Data).

As shown in the fourth line from the top in Fig. 3, the AD data 76 as the manufacturer-specific advertising data includes, in the beginning thereof, specific company identification information (Company _ID) 81 issued by Bluetooth_SIG with a length of 2 Oct (value of 0x0265 in the figure), followed by the communication data 82 to be used upon multi-address transmission as binary data with an arbitrary length.

In each BLE packet 50 actually broadcasted (multi-addressed) as a communication connection request using the plurality of advertising frequency channels, the protocol data unit 53 includes the advertiser's address 62 and the advertising data 63 in the BLE packet 50 of the predetermined format.

The advertising data 63 includes the AD data 76 having the communication data 82 together with the specific company identification information 81, and the communication data 82 in the AD data 76 includes, for example, the device information (Device_Data) corresponding to one or more of the control target apparatuses 30A to 30D specified by the remote data (operation instruction information) from any of the remotes 10A to 10D operated, the command data (Command_Data) for being the control command itself, or for generating the control command which is the specific control command for the device, and the control information (Control_Info) added for command generation as necessary.

Thus, in a case where the RF signal including the BLE packet 50 as a signal component is received by the reception-side wireless communication unit 25A to 25D incorporated into the control target apparatus 30A to 30D, the communication IC functions as the 2.4 GHz bandpass filter and the GFSK demodulation unit, and demodulates the RF signal received via the BLE antenna into the BLE packet 50 as the advertising packet.

Then, the MCU of the reception-side wireless communication unit 25A to 25D executes a reception control program before predetermined pairing, and in this manner, determines whether or not the remote identification information in the advertiser's address 62 matches the remote identification information stored in advance in the internal memory of the MCU itself. In any one or more of the reception-side wireless communication units 25A to 25D determined as matched (hereinafter also referred to as a matched reception-side wireless communication unit 25), processing of reading the advertising data 63 transmitted in the BLE packet 50 as the advertising packet is executed.

At this time, in the MCU of the matched reception-side wireless communication unit 25, based on the communication data 82 included together with the specific company identification information 81 in the AD data 76 in the reference packet, the control command (e.g., Command_Data of "0x01" indicating power ON/OFF) specified for the device (e.g., television set indicated by Device_Data of "0x01") specified by the specific device information can be selectively supplied as the specific control command based on the device information and the command data in the received advertising data to the corresponding device MCU 31A to 31D via the UART interface.

As described above, in the remote control system 1 of the present embodiment, the wireless communication apparatus 20 includes the transmission-side wireless communication units 21A to 21D each built in the remotes 10A to 10D having, e.g., the operation units 11A, 11B to which the operation input for the predetermined control instruction can be made, and the reception-side wireless communication units 25A to 25D which are the reception-side wireless communication units each incorporated into the control target apparatuses 30A to 30D to be controlled by any of the remotes 10A to 10D. The power-saving near field communication can be made between the remotes 10A, 10B, 10C, 10D and the control target apparatuses 30A, 30B, 30C, 30D via the transmission-side wireless communication units 21A to 21D and the reception-side wireless communication units 25A to 25D.

In each transmission-side wireless communication unit 21A to 21D, the BLE antenna 22A, 22B, and the like (hereinafter merely referred to as a BLE antenna 22) capable of performing the power-saving near field communication and hardware and software transmission circuit elements in the corresponding MCU 23A, 23B, and the like (hereinafter merely referred to as a MCU 23) form a first communication unit. Each MCU 23 further forms the first control unit that generates the communication connection request including the control instruction information according to the operation input to any of the operation units 11A, 11B and the like (hereinafter merely referred to as an operation unit 11) and the identification information on any of the remotes 10A to 10D operated and multi-addresses the RF signal via the BLE antenna 22 by the predetermined transmission method with the communication connection request included in the BLE packet 50 as the advertising packet.

The first control unit formed by the MCU 23 of any of the transmission-side wireless communication units 21A to 21D generates the communication connection request including, in the BLE packet 50 as the communication packet of the predetermined format, the specific company identification information 81 and the communication data 82 having the device information specified by the remote data generated according to the remote operation and the specific command data on such a device.

In each partner-side reception-side wireless communication unit 25A to 25D, the BLE antenna 26A, 26B, and the like (hereinafter merely referred to as a BLE antenna 26) capable of performing the power-saving near field communication and hardware and software reception circuit elements in the corresponding communication IC 27A, 27B, and the like (hereinafter merely referred to as a communication IC 27) form a second communication unit. Each communication IC 27 further forms the second control unit that on condition that the communication IC 27 has received, via the second communication unit, the invoking RF signal (communication connection request), which has been multi-addressed from any of the transmission-side wireless communication units 21A to 21D, based on the advertising packet, determines whether or not the identification information on any of the remotes 10A to 10D in the BLE packet 50 demodulated after reception of the RF signal matches the identification information already stored in the internal memory of the communication IC 27.

Then, the second control unit formed by each communication IC 27 determines whether or not the remote identification information in the advertising packet from any one or more of the remotes 10A to 10D matches any one or more pieces of identification information on the remotes 10A to 10D saved in advance in the internal memory of the communication IC 27 itself, and if matched, supplies the specific control command to the device side specified based on the device information and the command data in the communication data 82 in the advertising packet. Each communication IC 27 may save the same remote identification information, and in this case, ones of the control target apparatuses 30A to 30D with the same remote identification information can be controlled by operation of any one of the remotes 10A to 10D.

At least either the transmission-side wireless communication unit 21A to 21D or the reception-side wireless communication unit 25A to 25D, both the transmission-side wireless communication unit 21A to 21D and the reception-side wireless communication unit 25A, to 25D in the present embodiment, includes a plurality of units.

Further, in the present embodiment, the MCU 23 of at least one of the transmission-side wireless communication units 21A to 21D executes, as the first control unit, sleep mode control of bringing the corresponding transmission-side wireless communication unit 21A to 21D into a sleep state in a case where no operation is made on the operation unit 11 for a predetermined period which is preset certain standby time, and when detecting that the operation input is made to the operation unit 11 of any of the remotes 10A to 10D, causes the first communication unit and the first control unit to exit the sleep state.

The sleep mode control described herein is a control mode in which the MCU 23 is powered ON, but is in a low-power-consumption standby state with, e.g., a clock stopped. When the operation input is made to the operation unit 11 of any of the remotes 10A to 10D, the MCU 23 built in such an operated remote executes, e.g., interrupt processing of causing the MCU 23 to exit the sleep state, and accordingly, the sleep mode control ends. As described above, the sleep mode control is started with a lapse of the predetermined period without operation on the operation unit 11 as a trigger. Note that the sleep mode control also includes a case of transitioning to a state such as a low-power-consumption mode for reducing power consumption without stopping the clock.

In the present embodiment, the near field communication in accordance with the Bluetooth_Low_Energy standards is employed as the power-saving near field communication. When the operation unit 11 is operated in the standby state, the transmission-side wireless communication unit 21A to 21D broadcasts, by the MCU 23 as the first communication unit, the invoking communication connection request in advertising in the form of the BLE packet 50 including the PDU 53 of the advertising channel in accordance with the standards in a state in which the communication data 82 including the device information according to the control target apparatus and the specific command data on such a device is incorporated into the PDU 53 of the advertising channel together with the specific company identification information 81.

The communication IC 27 of any of the reception-side wireless communication units 25A to 25D makes determination, on condition that the communication IC 27 has received the communication connection request, on the matched reception-side wireless communication unit 25 without generating a communication connection response allowing connection partner authentication processing based on the identification information on any of the remotes 10A to 10D in the communication connection request, for example, even under a pairing setting mode, thereby receiving the communication data 82 according to the invoking communication connection request and supplying the specific control command to the device corresponding to any of the control target apparatuses 30A to 30D, such as supplying universal asynchronous receiver transmitter (UART) data to the device side.

In the present embodiment, the BLE antenna 22 and MCU 23 (first communication unit) of the transmission-side wireless communication unit 21A to 21D may receive, as a BLE signal, a control signal corresponding to the control instruction input to the operation unit 11A, 11B from external equipment, and in this case, the MCU 23 also has a function of generating, by executing a predetermined external input control program, the control instruction information (remote data) corresponding to the control instruction input as in the processing upon operation input to the operation unit 11 when receiving the control signal corresponding to the control instruction input from the external equipment via the first communication unit.

According to the claimed invention, the MCU 23 of each transmission-side wireless communication unit 21A to 21D generates the communication connection request including the communication data 82 encrypted by a predetermined method in the BLE packet 50 as the communication packet of the predetermined format, and when detecting the specific company identification information 81 in the advertising packet (communication packet of the predetermined format) as the invoking communication connection request, the communication IC 27 of the reception-side wireless communication unit 25A to 25D decrypts the encrypted communication data by a predetermined decryption method and make determination on the matched reception-side wireless communication unit 25.

Next, operation will be described.

In the near field communication apparatus 20 of the present embodiment configured as described above, when the transmission-side wireless communication unit 21A to 21D multi-addresses the communication connection request, the reception-side wireless communication unit 25A to 25D determines, by the second control unit, whether or not the received remote identification information matches the remote identification information saved in advance, and if matched, supplies the specific control command to the device side based on the device information and the command data in the received communication data 82. Thus, when any of the control target apparatuses 30A to 30D is remotely controlled according to the input operation on any of the remotes 10A to 10D, before connection between the transmission-side wireless communication units 21A to 21D and the reception-side wireless communication units 25A to 25D is established by pairing, the specific control command corresponding to the operation input to the operation unit 11 can be supplied to the specific device corresponding to any of the control target apparatuses 30A to 30D included as the communication data 82 in the advertising packet as the invoking communication connection request. As a result, power can be saved and degradation of responsiveness to the remote operation can be effectively reduced without the need for the remote 10A to 10D communicating with a HOST side responsible for communication control at certain time intervals for maintaining a communication connection state after pairing with the reception-side wireless communication unit 25A to 25D side.

In the present embodiment, at least either the transmission-side wireless communication unit 21A to 21D or the reception-side wireless communication unit 25A to 25D includes the plurality of units. Thus, not only one-to-one communication but also one-to-multiple communication, multiple-to-one communication, and multiple-to-multiple communication are allowed. Thus, the remote operation can be facilitated, and the control function can be improved.

In the present embodiment, in a case where no operation is made on the operation unit 11 within the predetermined period of the certain time or more, the first control unit of the transmission-side wireless communication unit 21A to 21D executes the sleep mode control of bringing the transmission-side wireless communication unit 21A to 21D into the sleep state, and on the other hand, causes the transmission-side wireless communication unit 21A to 21D to exit the sleep state when detecting that operation is made on the operation unit 11. Thus, the power consumption of the remote 10A to 10D under the sleep state is reduced, and in addition, the transmission-side wireless communication unit 21A to 21D can promptly exit the sleep state according to the operation input to the operation unit 11 and can promptly transmit the specific control command corresponding to the operation input, such as a control command for starting the device, before connection establishment by pairing.

In the present embodiment, the power-saving near field communication is the near field communication in accordance with the Bluetooth_Low_Energy standards, and the transmission-side wireless communication unit 21A to 21D broadcasts the communication connection request via the BLE antenna 22 in the form of the predetermined advertising packet including the protocol data unit of the advertising channel in accordance with the standards, and the MCU 23 thereof incorporates, into the PDU 53 of the advertising channel, the specific company identification information 81 and the communication data 82 which is the advertising data including the device information corresponding to the control target apparatus and the specific command data on such a device. Thus, at a stage before the synchronized communication connection state after pairing, the specific control command can be supplied to the device MCU side of the control target apparatus. Consequently, the power can be sufficiently saved in accordance with the Bluetooth_Low_Energy (hereinafter also merely referred to as BLE) communication standards.

In the present embodiment, the communication IC 27 of the reception-side wireless communication unit 25A to 25D determines, on condition that the communication IC 27 has received the invoking communication connection request, whether or not the specific company identification information 81 is detected in the BLE packet 50 as the communication packet of the communication connection request without generating the communication connection response allowing the connection partner authentication processing based on the remote identification information in the communication connection request even under the pairing setting mode, thereby determining the necessity of the decryption processing on the communication data 82 by the predetermined decryption method. With this configuration, when the specific company identification information 81 is detected, preparation for outputting the control command to the device corresponding to the control target apparatus based on the device information and the command data in the communication data 82 at this time can be facilitated.

In the present embodiment, when determining that the control target apparatus 30A to 30D is the device specified by the device information in the communication data 82, the reception-side wireless communication unit 25A to 25D supplies the specific control command as the UART data to the device side, thereby selectively controlling the device.

In the present embodiment, the first communication unit formed by the BLE antenna 22 and MCU 23 of each transmission-side wireless communication unit 21A to 21D can receive the control signal corresponding to the control instruction input to the operation unit 11 from the external equipment, and the MCU 23 as the first control unit also has the function of generating the control instruction information corresponding to the input when receiving the control signal corresponding to the control instruction input from the external equipment via the first communication unit. Thus, when any of the transmission-side wireless communication units 21A to 21D receives the control signal corresponding to the control instruction input to the operation unit 11 of the remote 10A to 10D from the external equipment, the first control unit can generate the control instruction information corresponding to the control instruction input, and therefore, expandability in the remote operation can be enhanced.

As described above, the remote control system 1 according to an aspect of the present invention includes the remotes 10A to 10D having the operation units 11 to which the operation input for the predetermined control instruction can be made, the control target apparatuses 30A to 30D to be controlled by the remotes 10A to 10D, and the wireless communication apparatus 20 configured as described above. When any of the transmission-side wireless communication units 21A to 21D multi-addresses the communication connection request, the reception-side wireless communication unit 25A to 25D side determines whether or not the received remote identification information matches the remote identification information saved in advance, and if matched, supplies the specific control command to the device side corresponding to the control target apparatus 30A to 30D based on the device information and the command data in the received communication data 82.

Thus, when any of the control target apparatuses 30A to 30D is remotely controlled according to the input operation on any of the remotes 10A to 10D, before connection is made between any of the remote-side wireless communication units 21A to 21D and any of the control-target-apparatus-side reception-side wireless communication units 25A to 25D by pairing, the specific control command corresponding to the operation input to the operation unit of the remote 10A to 10D can be supplied to the specific device on the control target apparatus side based on the device information and the command data in the communication data 82 in the advertising packet as the invoking communication connection request.

As a result, the remote 10A to 10D does not need to communicate with a HOST-side element in the MCU 23 for controlling pairing and subsequent Bluetooth communication via the first communication unit at certain time intervals in order to maintain the communication connection state after pairing with the reception-side wireless communication unit 25A to 25D side, and therefore, the power can be saved, for example, by stopping the clock in the MCU 23 during the standby state due to the absence of the operation input. In addition, degradation of the responsiveness to the remote operation can be effectively reduced.

As described above, in the present embodiment, the wireless communication apparatus 20 and the remote control system 1 can be provided, which are configured so that the power of the remotes 10A to 10D can be saved and degradation of the responsiveness to the remote operation can be effectively reduced without limiting the partner in the remote control by the remotes 10A to 10D to one.

Note that in one embodiment described above, the near field communication has been described as the BLE communication, but even in cases of other power-saving near field communication methods such as ZigBee (registered trademark), a wireless communication apparatus and a remote control system similar to those of one embodiment described above can be configured using multi-address transmission of, e.g., a communication connection request defined by each wireless communication method.

It has been described that the device corresponding to the control target apparatus to be operated is specified and the necessity of decrypting the communication data 82 for generating the corresponding control command can be determined based on whether or not the specific company identification information 81 is detected in addition to determination on matching in the remote identification information. However, after encryption and decryption processing available for normal BLE communication has been performed, the communication IC 27 may decrypt the communication data 82 by a predetermined decryption method.

The specific control command has been described, as one example, as the control command for ON/OFF of the home appliance such as the television set. However, the specific control command may be, for example, a control command for specifying a specific broadcasting channel or an input terminal in the case of the television set or for controlling the output of specific equipment or performing any control for other home appliances.

As described above, an aspect of the present invention can provide the wireless communication apparatus and the remote control system configured so that the power of the remote control apparatus can be saved and degradation of the responsiveness to the remote operation can be effectively reduced without limiting the partner in the remote control by the remote control apparatus to one. Such an aspect of the present invention is useful generally for a wireless communication apparatus that performs power-saving near field communication between a remote control apparatus and a control target apparatus and a remote control system including the wireless communication apparatus.

### Reference Signs List

1: Remote control system, 10A, 10B, 10C, 10D: Remote (remote control apparatus), 11, 11A, 11B: Operation unit (plurality of operation keys, plurality of operation input elements), 20: Wireless communication apparatus, 21A, 21B, 21C, 21D: Transmission-side wireless communication unit (transmission-side wireless communication module), 22, 22A, 22B: BLE antenna (first communication unit), 23, 23A, 23B: MCU (microcontroller unit, first communication unit, first control unit), 24A, 24B: Power supply battery, 25: Matched reception-side wireless communication unit, 25A, 25B, 25C, 25D: Reception-side wireless communication unit (reception-side wireless communication module), 26, 26A, 26B: BLE antenna (second communication unit), 27, 27A, 27B Communication IC (second communication unit, second control unit), 30A, 30B, 30C, 30D: Control target apparatus, 31A, 31B, 31C, 31D: Device MCU (Device_MCU), 50: BLE packet (BLE_Packet), 51: Preamble (Preamble), 52: Access address (Access_Address), 53: Protocol data unit (PDU), 54: CRC, 61: Header (Header), 62: Advertiser's address (Advertiser's_Address), 63: Advertising data (Advertising_Data), 71: Length (Length), 72: AD type (AD_Type), 73: AD data (AD_Data), 74: Length (Length), 75: AD type (AD_Type), 76: AD data (AD_Data), 81: Company identification information (Company _ID), 82: Communication data

## Claims

1. A wireless communication apparatus (20) comprising:
a transmission-side wireless communication unit (21A, 21B, 21C, 21D) configured to be built in a remote control apparatus (10A, 10B, 10C, 10D) having an operation unit (11, 11A, 11B) to which operation input for a predetermined control instruction is made; and
a reception-side wireless communication unit (25A, 25B, 25C, 25D) configured to be incorporated into a control target apparatus (30A, 30B, 30C, 30D) to be controlled by the remote control apparatus (10A, 10B, 10C, 10D),
wherein the wireless communication apparatus (20) is configured for performing power-saving near field communication between the remote control apparatus (10A, 10B, 10C, 10D) and the control target apparatus (30A, 30B, 30C, 30D) via the transmission-side wireless communication unit (21A, 21B, 21C, 21D) and the reception-side wireless communication unit (25A, 25B, 25C, 25D),
the transmission-side wireless communication unit (21A, 21B, 21C, 21D) includes a first communication unit (22, 22A, 22B) configured for performing the power-saving near field communication and a first control unit (23, 23A, 23B) that is configured for generating a communication connection request including control instruction information corresponding to the control instruction input to the operation unit (11, 11A, 11B) and identification information on the remote control apparatus (10A, 10B, 10C, 10D) and for multi-addressing the communication connection request via the first communication unit (22, 22A, 22B),
the reception-side wireless communication unit (25A, 25B, 25C, 25D) includes a second communication unit (26, 26A, 26B) configured for performing the power-saving near field communication and a second control unit (27, 27A, 27B) that is configured for determining, when receiving the communication connection request via the second communication unit (26, 26A, 26B), the identification information on the remote control apparatus (10A, 10B, 10C, 10D) in the communication connection request,
the control instruction information includes identification information corresponding to the remote control apparatus (10A, 10B, 10C, 10D) and a specific control command for the device,
the first control unit (23, 23A, 23B) of the transmission-side wireless communication unit (21A, 21B, 21C, 21D) is configured for generating the communication connection request including, in a communication packet of a predetermined format, specific company identification information and communication data having the identification information and the specific control command for the device specified by the control instruction information, and
the second control unit (27, 27A, 27B) of the reception-side wireless communication unit (25A, 25B, 25C, 25D) is configured
for determining, on condition that the second control unit (27, 27A, 27B) has received the communication connection request, whether or not the specific company identification information is detected in the communication packet of the communication connection request without generating a communication connection response allowing connection partner authentication processing based on the identification information on the remote control apparatus (10A, 10B, 10C, 10D) in the communication connection request;
for decrypting the communication data that was encrypted by a predetermined decryption method when the specific company identification information is detected; and
for determining whether or not the identification information on the remote control apparatus (10A, 10B, 10C, 10D) matches remote control apparatus (10A, 10B, 10C, 10D) identification information saved in advance in the reception-side wireless communication unit, and if matched, for supplying the specific control command to a device side based on the communication data.

2. The wireless communication apparatus (20) according to claim 1, wherein
the first control unit (23, 23A, 23B) of the transmission-side wireless communication unit (21A, 21B, 21C, 21D) is configured for executing sleep mode control of bringing the transmission-side wireless communication unit (21A, 21B, 21C, 21D) into a sleep state in a case where no operation is made on the operation unit (11, 11A, 11B) for a predetermined period, and for causing the transmission-side wireless communication unit (21A, 21B, 21C, 21D) to exit the sleep state when detecting that operation is made on the operation unit.

3. The wireless communication apparatus (20) according to any one of claims 1 to 2, wherein
the power-saving near field communication is near field communication in accordance with a Bluetooth_Low_Energy standard,
the transmission-side wireless communication unit (21A, 21B, 21C, 21D) is configured for broadcasting, by the first communication unit (22, 22A, 22B), the communication connection request in a form of a predetermined advertising packet including a protocol data unit of an advertising channel in accordance with the standard, and
the first control unit (23, 23A, 23B) is configured for incorporating, into the protocol data unit of the advertising channel, the specific company identification information and advertising data including the identification information and the specific control command for the device specified by the control instruction information.

4. The wireless communication apparatus (20) according to any one of claims 1 to 3, wherein
when determining that the control target apparatus (30A, 30B, 30C, 30D) is a device specified by the communication data, the reception-side wireless communication unit (25A, 25B, 25C, 25D) is configured for supplying the specific control command to the device side by universal asynchronous receiver transmitter.

5. The wireless communication apparatus (20) according to any one of claims 1 to 4, wherein
the first communication unit (22, 22A, 22B) of the transmission-side wireless communication unit (21A, 21B, 21C, 21D) is configured for receiving a control signal corresponding to the control instruction input to the operation unit (11, 11A, 11B) from external equipment, and
the first control unit (23, 23A, 23B) also has a function of generating control instruction information corresponding to the control instruction input when receiving the control signal corresponding to the control instruction input from the external equipment via the first communication unit (22, 22A, 22B).

6. A remote control system (1) comprising:
a remote control apparatus (10A, 10B, 10C, 10D) including an operation unit (11, 11A, 11B) to which operation input for a predetermined control instruction is made;
a control target apparatus (30A, 30B, 30C, 30D) to be controlled by the remote control apparatus (10A, 10B, 10C, 10D); and
the wireless communication apparatus (20) according to any one of claims 1 to 5.

## Patentansprüche

1. Drahtlose Kommunikationsvorrichtung (20), mit:
einer sendeseitigen drahtlosen Kommunikationseinheit (21A, 21B, 21C, 21D), die dafür konfiguriert ist, in eine Fernbedienung (10A, 10B, 10C, 10D) mit einer Bedieneinheit (11, 11A, 11B) eingebaut zu werden, an der eine Bedieneingabe für einen vorgegebenen Steuerbefehl erfolgt; und
einer empfangsseitigen drahtlosen Kommunikationseinheit (25A, 25B, 25C, 25D), die dafür konfiguriert ist, in eine Steuerzielvorrichtung (30A, 30B, 30C, 30D) integriert zu werden, um durch die Fernbedienung (10A, 10B, 10C, 10D) gesteuert zu werden,
wobei die drahtlose Kommunikationsvorrichtung (20) dafür konfiguriert ist, eine energiesparende Nahfeldkommunikation zwischen der Fernbedienung (10A, 10B, 10C, 10D) und der Steuerzielvorrichtung (30A, 30B, 30C, 30D) über die sendeseitige drahtlose Kommunikationseinheit (21A, 21B, 21C, 21D) und die empfangsseitige drahtlose Kommunikationseinheit (25A, 25B, 25C, 25D) auszuführen,
wobei die sendeseitige drahtlose Kommunikationseinheit (21A, 21B, 21C, 21D) eine erste Kommunikationseinheit (22, 22A, 22B), die dafür konfiguriert ist, die energiesparende Nahfeldkommunikation auszuführen, und eine erste Steuereinheit (23, 23A, 23B) aufweist, die dafür konfiguriert ist, eine Kommunikationsverbindungsanforderung zu erzeugen, die Steuerbefehlinformation, die dem in die Bedieneinheit (11, 11A, 11B) eingegebenen Steuerbefehl entspricht, und Identifizierungsinformation über die Fernbedienung (10A, 10B, 10C, 10D) und für eine Mehrfachadressierung der Kommunikationsverbindungsanforderung über die erste Kommunikationseinheit (22, 22A, 22B) enthält,
wobei die empfangsseitige drahtlose Kommunikationseinheit (25A, 25B, 25C, 25D) eine zweite Kommunikationseinheit (26, 26A, 26B), die dafür konfiguriert ist, die energiesparenden Nahfeldkommunikation auszuführen, und eine zweite Steuereinheit (27, 27A, 27B) aufweist, die dafür konfiguriert ist, die Identifizierungsinformation über die Fernbedienung (10A, 10B, 10C, 10D) in der Kommunikationsverbindungsanforderung zu bestimmen, wenn die Kommunikationsverbindungsanforderung über die zweite Kommunikationseinheit (26, 26A, 26B) empfangen wird,
die Steuerbefehlinformation der Fernbedienung (10A, 10B, 10C, 10D) entsprechende Identifizierungsinformation und einen spezifischen Steuerbefehl für die Vorrichtung enthält,
die erste Steuereinheit (23, 23A, 23B) der sendeseitigen drahtlosen Kommunikationseinheit (21A, 21B, 21C, 21D) dafür konfiguriert ist, die Kommunikationsverbindungsanforderung zu erzeugen, die in einem Kommunikationspaket eines vorgegebenen Formats spezifische Unternehmensidentifizierungsinformation und Kommunikationsdaten enthält, die die Identifizierungsinformation und den spezifischen Steuerbefehl für die Vorrichtung aufweisen, die durch die Steuerbefehlinformation spezifiziert sind, und
die zweite Steuereinheit (27, 27A, 27B) der empfangsseitigen drahtlosen Kommunikationseinheit (25A, 25B, 25C, 25D) dafür konfiguriert ist,
unter der Bedingung, dass die zweite Steuereinheit (27, 27A, 27B) die Kommunikationsverbindungsanforderung empfangen hat, zu bestimmen, ob die spezifische Unternehmensidentifizierungsinformation im Kommunikationspaket der Kommunikationsverbindungsanforderung erfasst wird oder nicht, ohne eine Kommunikationsverbindungsantwort zu erzeugen, wodurch eine Verbindungspartnerauthentifizierungsverarbeitung basierend auf der Identifizierungsinformation über die Fernbedienung (10A, 10B, 10C, 10D) in der Kommunikationsverbindungsanforderung ermöglicht wird;
die Kommunikationsdaten, die verschlüsselt wurden, durch ein vorgegebenes Entschlüsselungsverfahren zu entschlüsseln, wenn die spezifische Unternehmensidentifizierungsinformation erfasst wird; und
zu bestimmen, ob die Identifizierungsinformation über die Fernbedienung (10A, 10B, 10C, 10D) mit der Fernbedienungs(10A, 10B, 10C, 10D) identifizierungsinformation übereinstimmt, die im Voraus in der empfangsseitigen drahtlosen Kommunikationseinheit gespeichert wurde, und wenn sie übereinstimmt, den spezifischen Steuerbefehl an einer Vorrichtungsseite basierend auf den Kommunikationsdaten zuzuführen.

2. Drahtlose Kommunikationsvorrichtung (20) nach Anspruch 1, wobei
die erste Steuereinheit (23, 23A, 23B) der sendeseitigen drahtlosen Kommunikationseinheit (21A, 21B, 21C, 21D) für die Ausführung einer Schlafmodussteuerung konfiguriert ist, um die sendeseitige drahtlose Kommunikationseinheit (21A, 21B, 21C, 21D) in einem Fall in einen Ruhemodus zu versetzen, in dem über eine vorgegebene Zeitdauer keine Bedienung an der Bedieneinheit (11, 11A, 11B) erfolgt, und zu veranlassen, dass die sendeseitige drahtlose Kommunikationseinheit (21A, 21B, 21C, 21D) aus dem Ruhemodus austritt, wenn erfasst wird, dass eine Bedienung an der Bedieneinheit erfolgt.

3. Drahtlose Kommunikationsvorrichtung (20) nach Anspruch 1 oder 2, wobei
die energiesparende Nahfeldkommunikation eine Nahfeldkommunikation gemäß einem Bluetooth_Low_Energy-Standard ist,
die sendeseitige drahtlose Kommunikationseinheit (21A, 21B, 21C, 21D) dafür konfiguriert ist, durch die erste Kommunikationseinheit (22, 22A, 22B) die Kommunikationsverbindungsanforderung in Form eines vorgegebenen Werbepakets, das eine Protokolldateneinheit eines Werbekanals enthält, gemäß dem Standard zu übertragen, und
die erste Steuereinheit (23, 23A, 23B) dafür konfiguriert ist, in die Protokolldateneinheit des Werbekanals die spezifische Unternehmensidentifizierungsinformation und Werbedaten einzufügen, die die Identifizierungsinformation und den spezifischen Steuerbefehl für die durch die Steuerbefehlinformation spezifizierte Vorrichtung enthalten.

4. Drahtlose Kommunikationsvorrichtung (20) nach einem der Ansprüche 1 bis 3, wobei
wenn festgestellt wird, dass die Steuerzielvorrichtung (30A, 30B, 30C, 30D) eine durch die Kommunikationsdaten spezifizierte Vorrichtung ist, die empfangsseitige drahtlose Kommunikationseinheit (25A, 25B, 25C, 25D) dafür konfiguriert ist, den spezifischen Steuerbefehl der Vorrichtungsseite über einen universellen asynchronen Empfänger/Sender zuzuführen.

5. Drahtlose Kommunikationsvorrichtung (20) nach einem der Ansprüche 1 bis 4, wobei
die erste Kommunikationseinheit (22, 22A, 22B) der sendeseitigen drahtlosen Kommunikationseinheit (21A, 21B, 21C, 21D) dafür konfiguriert ist, ein Steuersignal, das dem in die Bedieneinheit (11, 11A, 11B) eingegebenen Steuerbefehl entspricht, von einer externen Vorrichtung zu empfangen, und
die erste Steuereinheit (23, 23A, 23B) auch eine Funktion aufweist, dem eingegebenen Steuerbefehl entsprechende Steuerbefehlinformation zu erzeugen, wenn das dem eingegebenen Steuerbefehl entsprechende Steuersignal von der externen Vorrichtung über die erste Kommunikationseinheit (22, 22A, 22B) empfangen wird.

6. Fernbedienungssystem (1), mit:
einer Fernbedienung (10A, 10B, 10C, 10D), die eine Bedieneinheit (11, 11A, 11B) aufweist, an der eine Bedieneingabe für einen vorgegebenen Steuerbefehl erfolgt;
einer durch die Fernbedienung (10A, 10B, 10C, 10D) zu steuernden Steuerzielvorrichtung (30A, 30B, 30C, 30D); und
der drahtlosen Kommunikationsvorrichtung (20) nach einem der Ansprüche 1 bis 5.

## Revendications

1. Appareil de communication sans fil (20) comprenant :
une unité de communication sans fil côté émission (21A, 21B, 21C, 21D) configurée pour être construite dans un appareil de commande à distance (10A, 10B, 10C, 10D) ayant une unité de fonctionnement (11, 11A, 11B) à laquelle une entrée de fonctionnement pour une instruction de commande prédéterminée est effectuée ; et
une unité de communication sans fil côté réception (25A, 25B, 25C, 25D) configurée pour être incorporée dans un appareil cible de commande (30A, 30B, 30C, 30D) afin d'être commandée par l'appareil de commande à distance (10A, 10B, 10C, 10D),
dans lequel l'appareil de communication sans fil (20) est configuré pour réaliser une communication de champ proche économisant l'énergie entre l'appareil de commande à distance (10A, 10B, 10C, 10D) et l'appareil cible de commande (30A, 30B, 30C, 30D) par l'intermédiaire de l'unité de communication sans fil côté émission (21A, 21B, 21C, 21D) et l'unité de communication sans fil côté réception (25A, 25B, 25C, 25D),
l'unité de communication sans fil côté émission (21A, 21B, 21C, 21D) inclut une première unité de communication (22, 22A, 22B) configurée pour réaliser la communication de champ proche économisant l'énergie et une première unité de commande (23, 23A, 23B) qui est configurée pour générer une requête de connexion en communication incluant des informations d'instruction de commande correspondant à l'entrée d'instruction de commande dans l'unité de fonctionnement (11, 11A, 11B) et des informations d'identification sur l'appareil de commande à distance (10A, 10B, 10C, 10D) et pour multi-adresser la requête de connexion en communication par l'intermédiaire de la première unité de communication (22, 22A, 22B),
l'unité de communication sans fil côté émission (25A, 25B, 25C, 25D) inclut une seconde unité de communication (26, 26A, 26B) configurée pour réaliser la communication de champ proche économisant l'énergie et une seconde unité de commande (27, 27A, 27B) qui est configurée pour déterminer, lors de la réception de la requête de connexion en communication par l'intermédiaire de la seconde unité de communication (26, 26A, 26B), les informations d'identification sur l'appareil de commande à distance (10A, 10B, 10C, 10D) dans la requête de connexion en communication,
les informations d'instruction de commande incluent des informations d'identification correspondant à l'appareil de commande à distance (10A, 10B, 10C, 10D) et un ordre de commande spécifique pour le dispositif,
la première unité de commande (23, 23A, 23B) de l'unité de communication sans fil côté émission (21A, 21B, 21C, 21D) est configurée pour générer la requête de connexion en communication incluant, dans un paquet de communication d'un format prédéterminé, des informations d'identification de société spécifiques et des données de communication ayant les informations d'identification et l'ordre de commande spécifique pour le dispositif spécifié par les informations d'instruction de commande, et
la seconde unité de commande (27, 27A, 27B) de l'unité de communication sans fil côté réception (25A, 25B, 25C, 25D) est configurée
pour déterminer, à la condition que la seconde unité de commande (27, 27A, 27B) ait reçu la requête de connexion en communication, que les informations d'identification de société spécifiques soient ou non détectées dans le paquet de communication de la requête de connexion en communication sans générer de réponse de connexion en communication permettant le traitement de l'authentification du partenaire de connexion en se basant sur les informations d'identification sur l'appareil de commande à distance (10A, 10B, 10C, 10D) dans la requête de connexion en communication ;
pour déchiffrer les données de communication qui ont été chiffrées par un procédé de déchiffrage prédéterminé lorsque les informations d'identification de société spécifiques sont détectées ; et
pour déterminer si les informations d'identification sur l'appareil de commande à distance (10A, 10B, 10C, 10D) correspondent ou non aux informations d'identification de l'appareil de commande à distance (10A, 10B, 10C, 10D) enregistrées à l'avance dans l'unité de communication sans fil côté réception et, en cas de correspondance, pour fournir l'ordre de commande spécifique à un côté dispositif en se basant sur les données de communication.

2. Appareil de communication sans fil (20) selon la revendication 1, dans lequel
la première unité de commande (23, 23A, 23B) de l'unité de communication sans fil côté émission (21A, 21B, 21C, 21D) est configurée pour exécuter la commande de mode de veille consistant à amener l'unité de communication sans fil côté émission (21A, 21B, 21C, 21D) dans un état de veille dans le cas où aucune fonction n'est effectuée sur l'unité de fonctionnement (11, 11A, 11B) pendant une période prédéterminée, et pour amener l'unité de communication sans fil côté émission (21A, 21B, 21C, 21D) à sortir de l'état de veille lors de la détection que la fonction est effectuée sur l'unité de fonctionnement.

3. Appareil de commande sans fil (20) selon l'une quelconque des revendications 1 à 2, dans lequel
la communication de champ proche économisant l'énergie est une communication de champ proche conforme à une norme Bluetooth à basse consommation,
l'unité de communication sans fil côté émission (21A, 21B, 21C, 21D) est configurée pour faire diffuser, par la première unité de communication (22, 22A, 22B), la requête de connexion en communication sous la forme d'un paquet d'annonce prédéterminé incluant une unité de données de protocole d'un canal d'annonce conformément à la norme, et
la première unité de commande (23, 23A, 23B) est configurée pour incorporer, dans l'unité de données de protocole du canal d'annonce, les informations d'identification de société spécifiques et des données d'annonce incluant les informations d'identification et l'ordre de commande spécifique pour le dispositif spécifié par les informations d'instruction de commande.

4. Appareil de commande sans fil (20) selon l'une quelconque des revendications 1 à 3, dans lequel
lors de la détermination que l'appareil de cible de commande (30A, 30B, 30C, 30D) est un dispositif spécifié par les données de communication, l'unité de communication sans fil côté réception (25A, 25B, 25C, 25D) est configurée pour fournir l'ordre de commande spécifique au côté dispositif par un émetteur-récepteur asynchrone universel.

5. Appareil de commande sans fil (20) selon l'une quelconque des revendications 1 à 4, dans lequel
la première unité de communication (22, 22A, 22B) de l'unité de communication sans fil côté émission (21A, 21B, 21C, 21D) est configurée pour recevoir un signal de commande correspondant à l'entrée d'instruction de commande à l'unité de fonctionnement (11, 11A, 11B) depuis l'équipement externe, et
la première unité de commande (23, 23A, 23B) a également une fonction consistant à générer des informations d'instruction de commande correspondant à l'entrée d'instruction de commande lors de la réception du signal de commande correspondant à l'entrée d'instruction de commande depuis l'équipement externe par l'intermédiaire de la première unité de communication (22, 22A, 22B).

6. Système de commande à distance (1) comprenant :
un appareil de commande à distance (10A, 10B, 10C, 10D) incluant une unité de fonctionnement (11, 11A, 11B) dans laquelle l'entrée de fonctionnement pour une instruction de commande prédéterminée est effectuée ;
un appareil cible de commande (30A, 30B, 30C, 30D) destiné à être commandé par l'appareil de commande à distance (10A, 10B, 10C, 10D) ; et
l'appareil de commande sans fil (20) selon l'une quelconque des revendications 1 à 5.
